# EUROPÄISCHE PATENTSCHRIFT

(11) **EP 0 522 195 B1**
(45) Veröffentlichungstag und Bekanntmachung des Hinweises auf die Patenterteilung: **12.04.1995**
(21) Anmeldenummer: 91111650.7
(22) Anmeldetag: 12.07.1991
(51) Int. Cl.: B60R 13/00, G09F 21/04

(54) **Werbeschildanordnung für Kraftfahrzeuge**
Advertising sign arrangement for vehicles
Dispositif d'ensigne publicitaire pour voitures

(43) Veröffentlichungstag der Anmeldung: 13.01.1993
(73) Patentinhaber: Filipek, Henre, A-5231 Schalchen (AT)
(72) Erfinder: Filipek, Henre, A-5231 Schalchen (AT)

(56) Entgegenhaltungen:
- EP-A- 0 398 784
- DE-A- 2 921 355
- FR-A- 2 619 772
- US-A- 4 047 747

## Beschreibung

Die Erfindung bezieht sich auf eine Werbeschildanordnung für Kraftfahrzeuge, vorzugsweise für Lastkraftwagen mit einem das Dach des Fahrerhauses überragenden Ladeflächenaufbau und einer auf dem Dach des Fahrerhauses angeordneten, sich in etwa über dessen Breite erstreckenden, schräg nach hinten geneigten Luftleitfläche, wie sie beispielsweise aus der FR-A-2 619 772 bekannt ist.

Es ist bereits bekannt, auf dem Dach des Fahrerhauses von LKW Luftleitflächen anzuordnen. Gemeinsames Kennzeichen dieser aerodynamischen Hilfen sind um etwa 45° schräg nach hinten geneigte Elemente, die auf dem Dach des Fahrerhauses montiert werden, sich vorzugsweise über dessen gesamte Breite erstrecken und so den das Dach des Fahrerhauses überragenden Ladeflächenaufbau gegen den Fahrtwind abschirmen.

Der Wirkungsgrad dieser einfachen Elemente konnte entscheidend durch eine zweite Luftleitfläche verbessert werden, die zusammen mit der Hauptleitfläche eine Venturidüse bildet, in der die anströmende Luft beschleunigt wird. Windabweiser dieser Bauart werden beispielsweise in der US-A-4 047 747 und in der DE-A-29 21 355 beschrieben und sind Stand der Technik.

Stand der Technik sind auch Versuche, eine bei Tageslicht betriebsfähige Lichtreklame durch Anordnung einer horizontalen Schriftmaske über einer, um etwa 45 ° geneigten, von einer Fahrzeugscheibe gebildeten, teilreflektierenden Fläche herzustellen (siehe z.B. EP-A-0 398 784). Bekannt ist aus der britischen Patentschrift 258 599 (GOLD) auch die Anordnung einer Lichtquelle in einem über der Schriftmaske angeordneten Gehäuse.

Schilder mit Umlenkspiegel haben eine hohe relative Leuchtdichte, solange der Lichtlaufweg sauber ist. Diese elementare Forderung erschwerte die Verwendung der bisher bekannten Werbeschilder bis zur praktischen Unverwendbarkeit beim Einsatz auf Kraftfahrzeugen. Versuche, eine vertikal zur Luftanströmrichtung stehende Glasscheibe zum Schutz der Schriftmaske und des Umlenkspiegels vor Verschmutzung anzuordnen, erforderten eine sehr aufwendige Gehäuseausbildung wegen der notwendigen hermetischen Abdichtung. Schwitzwasserbildung und aufprallende Schmutzpartikel führten schon nach kurzer Zeit zum Funktionsverlust derartiger Werbeschilder. Zu den genannten Nachteilen kamen ein untragbar hoher Luftwiderstand, Vibrationen und Lärmentwicklung, womit sich der Einsatz solcher nach dem Stand der Technik gestalteter Werbeschilder bei den hohen Reisegeschwindigkeiten moderner Fahrzeuge von selbst verbot.

Aufgabe der Erfindung ist es, eine Werbeschildanordnung zu schaffen, das den hohen Aufmerksamkeitswert einer Lichtreklame mit den Vorteilen verbindet, die Windabweiser und Luftleitbleche zur Erzielung eines möglichst niedrigen Luftwiderstandsbeiwertes (c_{w}-Wert) haben. Die Aufgabe ist durch die Merkmale des Anspruchs 1 gelöst. Hierbei ist erfindungsgemäß über der Luftleitfläche etwa horizontal eine Hell-Dunkel-Schriftmaske angeordnet und die Vorderseite der etwa 45 ° zur Horizontalen geneigten Luftleitfläche ist im Projektionsbereich der Hell-Dunkel-Schriftmaske als totalreflektierender Umlenkspiegel ausgebildet, und zwischen dem hinteren Rand der Hell-Dunkel-Schriftmaske und der Luftleitfläche ein Spalt für den Durchtritt des anströmenden Fahrtwindes vorgesehen. Die Anordnung ist derart ausgebildet, daß sie nach Art einer Venturidüse wirkt.

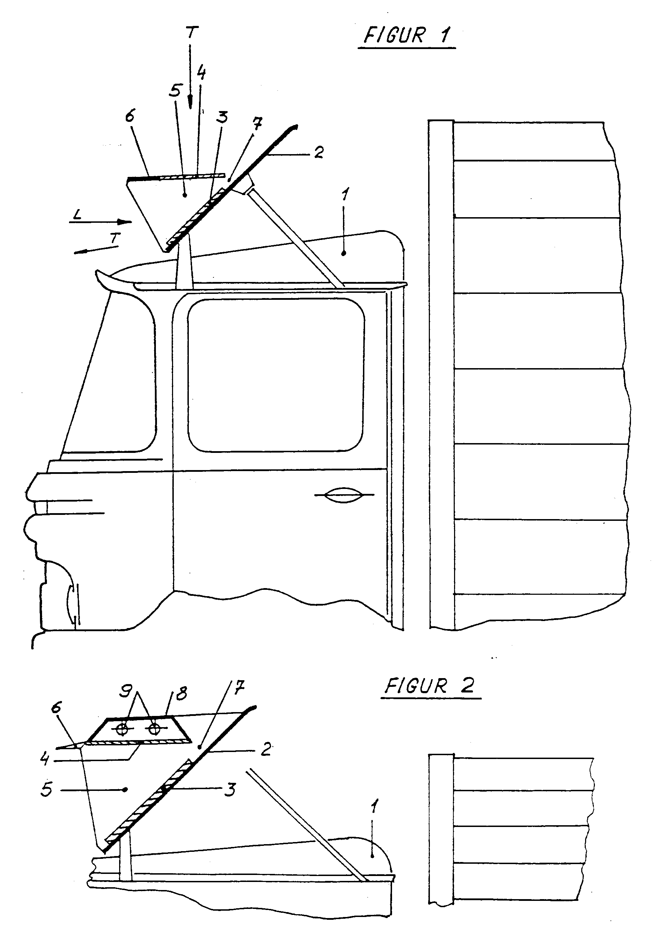

Die erfindungsgemässe Lösung eines zum Betrieb auf Kraftfahrzeugen geeigneten Leuchtschildes ist in den Figuren 1 und 2 dargestellt.

Auf dem Fahrzeugdach (1) ist ein in bekannter Weise ausgebildetes als Luftleitfläche dienendes Luftleitblech ( 2) im Winkel von etwa 45 ° zur Horizontalen befestigt.Diese Grundkonstruktion trägt im Projektionsbereich der Schriftmaske (4) einen vorzugsweise totalreflektierenden Umlenkspiegel (3). Die Schriftmaske (4) ist so über dem Spiegel (3) angeordnet, dass durchtretendes Tageslicht (T) in Pfeilrichtung zum Betrachter hin umgelenkt wird. Diese Maske (4) ist vorteilhaft in einem kleinen Winkelzur Richtung des anströmenden Fahrtwindes (L) angestellt bzw. geneigt, um das aerodynamische Verhalten des Werbeschildes zu optimieren. Die Leuchtwirkung beeinträchtigendes Streulicht wird durch vorzugsweise matt dunkel gefärbte seitliche Abschlüsse (5) und/oder einen gleichartig ausgebildeten Schirm (6) eliminiert. Alle diese Bauteile werden vorteilhaft den Luftströmungsverhältnissen angepasst, was durch geeignete Anstellwinkel, Abrisskanten oder sonstige - auch kombiniert angewendete - aerodynamische Massnahmen erreicht wird.

Der in Pfeilrichtung anströmende Fahrtwind (L) trifft in günstigem Winkel auf das Luftleitblech (2) und den in dieses integrierten Umlenkspiegel (3), und bildet erfindungsgemäss zusammen mit der Schriftmaske (4) und in eventi mit dem Schirm (6) und den seitlichen Abschlüssen (5) einen sich verjüngenden Kanal, der in den Abströmspalt (7) mündet. Erst diese nach dem Prinzip der Venturidüse wirkende Anordnung erzielt die für eine einwandfreie Dauerfunktion des Leuchtschildes notwendige Selbstreinigungswirkung, da Staub und/oder Regenwasser mit hoher Geschwindigkeit über die Funktionsflächen (3) und (4) geführt werden. Der aerodynamische Wirkungsgrad wird durch geeignete Anordnung einer Abrisskante auf dem Leitblech (2) und/oder der Fläche (4) stark gesteigert.

Die Strömungsverhältnisse unter besonderer Bedachtnahme auf die Selbstreinigungswirkung können erfindungsgemäss noch dadurch verbessert werden, dass der Querschnitt des Anströmspaltes (7) als bestimmende Grösse der Luftströmungsgeschwindigkeit nicht über die Gesamtbreite des Luftleitbleches einheitlich gross ist.

In der Praxis kann es zweckmässig sein, Schriftmaske (4) und Schirmteil (6) als Baueinheit auszubilden. Es ist auch vorgesehen, das auffallende Licht (T) in der Hell-Dunkel-Schriftmaske (4) und/oder dem Umlenkspiegel durch Prismen, Linsen Grenzflächen, Farbschichten und dergleichen zu konzentrieren und oder zu färben, wobei die Anordnung dieser Elemente im Lichtlaufweg entweder einzeln oder in Kombination miteinander zur Verstärkung des Hell-Dunkel-Kontrastes Schrift/Hintergrund erfolgt. Die Oberflächen von Schriftmaske und Umlenkspiegel sollen bevorzugt glatt und kratzfest sein.

Einfache Schriftmasken ohne Lichtdurchtrittsverluste lassen sich durch Ausnehmen der Bild- oder Schriftteile aus einer Metall oder Kunststoffplatte realisieren, wobei vorteilhaft der Umlenkspiegel ganz oder partiell eingefärbt wird. Eine weitere Variante der Erfindung ist die direkte Verbindung der Schriftmaske (4) mit dem Umlenkspiegel (3), wobei die Aufgabe der horizontalen Luftleitfläche von einer transparenten (gefärbten) Scheibe oder auch nur von der Schirmfläche (6) allein übernommen wird.

## Patentansprüche

1. Werbeschildanordnung (3-6) für Kraftfahrzeuge, vorzugsweise für Lastkraftwagen, mit einem das Dach (1) des Fahrerhauses überragenden Ladeflächenaufbau und einer auf dem Dach (1) des Fahrerhauses angeordneten, sich über in etwa dessen Breite erstreckenden, schräg nach hinten geneigten Luftleitfläche (2), dadurch gekennzeichnet, daß über der Luftleitfläche (2) etwa horizontal eine Hell-Dunkel-Schriftmaske (4) angeordnet und die Vorderseite der etwa 45 ° zur Horizontalen geneigten Luftleitfläche (2) im Projektionsbereich der Hell-Dunkel-Schriftmaske (4) als totalreflektierender Umlenkspiegel (3) ausgebildet ist, und daß zwischen dem hinteren Rand der Hell-Dunkel-Schriftmaske (4) und der Luftleitfläche (2) ein Spalt (7) für den Durchtritt des anströmenden Fahrtwindes vorgesehen ist, derart, daß die Anordnung nach Art einer Venturidüse wirkt.

2. Werbeschild nach Anspruch 1, dadurch gekennzeichnet, dass die Hell-Dunkel-Schriftmaske (4) und/oder der Umlenkspiegel (3) das auffallende Licht (T) durch Prismen, Linsen, Grenzflächen oder Farbschichten konzentriert und/oder färbt.

3. Werbeschild nach den Ansprüchen 1 oder 2, dadurch gekennzeichnet, dass über der Hell-Dunkel-Schriftmaske (4) eine in einem Gehäuse (8) angeordnete Lichtquelle (9) vorgesehen ist.

## Claims

1. Advertisement shield which is specifically structured for mounting on a vehicle, especially the roof of a heavyduty truck and is also a wind deflector suited to slope front to back over about the same area of the roof, constructed so that the light/dark contrast print screen (4) is on an approximately horizontal surface (6) above the air dam (2) itself which is equipped with a total reflection mirror (3) in the projection range of the print mask (4), whereas a space (7) is left between the dam surface (2) and the print screen surface (4) designed to allow oncoming wind to pass through.

2. Advertisement shield according to claim 1, constructed so that light is concentrated through prisms, lenses, cutout stencils or color film onto the light/dark contrast screen on the horizontal surface (4) and/or the mirror (3).

3. Advertisement shield according to claim 1 or claim 2, constructed so that a light source (9) in the housing (8) is mounted over the print screen (4).

## Revendications

1. Panonceau publicitaire pour vehicules automobiles, de preference pour camions, compose d'une structure-support s'clevant au-dessus du toit de la cabine du conducteur et d'une surface conductrice d'air disposee sur le toit de la cabine et s'etendant, de maniere inclinee vers l'arriere, sur presque toute la largeur du toit, caracterise par le fait qu'un masque a texte clair fonce (4) est dispose de facon quasiment horizontale au-dessus de la surface conductrice (2) et que la face avant de la surface conductrice (2), inclinee d'environ 45° par rapport a l'horizontale, est concue dans la zone de projection du masque (2) sous forme de miroir de renvoi (3), ayant un action de reflexion totale, un ecart (7) etant prevu, pour le passage du vent affluant pendant le deplacement, entre le bord arriere du masque (4) et la surface conductrice (2).

2. Panonceau publicitaire selon la revendication 1, caracterise par le fait que le masque (4) et/ou le miroir de renvoi (3) concentre et/ou colore la lumiere tombe dessus (T) au moyen de prismes, lentilles, surfaces limites ou couches de couleurs.

3. Panonceau publicitaire selon les revendications 1 ou 2, caracterise par le fait qu'une source lumineuse (9) disposee dans un boitier (8) est prevue au-dessus du masque (4).
